# EUROPÄISCHE PATENTSCHRIFT

(11) **EP 3 984 342 B1**
(45) Veröffentlichungstag und Bekanntmachung des Hinweises auf die Patenterteilung: **18.12.2024**
(21) Anmeldenummer: 21193807.1
(22) Anmeldetag: 30.08.2021
(51) Int. Cl.: A01C 17/00, A01C 21/00

(54) **VERFAHREN UND VORRICHTUNG ZUM AUSBRINGEN VON STREUGUT AUF EINE LANDWIRTSCHAFTLICHE NUTZFLÄCHE**
METHOD AND DEVICE FOR APPLYING MATERIAL TO AN AGRICULTURAL CROP AREA
PROCÉDÉ ET DISPOSITIF D'ÉPANDAGE D'UN PRODUIT À ÉPANDRE SUR UNE TERRE AGRICOLE

(30) Priorität: 14.10.2020 DE 102020126932
(43) Veröffentlichungstag der Anmeldung: 20.04.2022
(73) Patentinhaber: Amazonen-Werke H. Dreyer SE & Co. KG, 49205 Hasbergen (DE)
(72) Erfinder: Große Brinkhaus, Andre, 48149 Münster (DE)

(56) Entgegenhaltungen:
- EP-A1- 2 752 114
- EP-A1- 3 453 241
- EP-A2- 2 417 848
- DE-A1- 102014 115 560

## Beschreibung

Die Erfindung betrifft ein Verfahren zum Ausbringen von Streugut auf eine landwirtschaftliche Nutzfläche gemäß Patentanspruch 1 und eine landwirtschaftliche Streumaschine gemäß dem Patentanspruch 6. Während des Ausbringens von Streugut auf eine landwirtschaftliche Nutzfläche ist die Streugutausbringung im Nahbereich von Ausbringgrenzen, welche von der landwirtschaftlichen Streumaschine während des Streuvorgangs überfahren werden, temporär zu unterbrechen, damit beispielsweise eine Streugutausbringung außerhalb der landwirtschaftlichen Nutzfläche vermieden oder eine übermäßige Streugutausbringung im Übergang zum Vorgewende verhindert wird. Insbesondere beim Ein- und Ausfahren ins Vorgewende ergibt sich regelmäßig die Notwendigkeit, die Streugutausbringung temporär zu unterbrechen.

Beim Ausfahren aus dem Vorgewende ist die Streugutausbringung an einem vorgegebenen Einschaltpunkt wieder fortzusetzen, um die beabsichtigte Streugutverteilung auf der landwirtschaftlichen Nutzfläche realisieren zu können. Das Einstellen einer geeigneten Maschinenkonfiguration im Nahbereich einer Ausbringgrenze im Anschluss an eine Unterbrechung der Streugutausbringung stellt in der Praxis weiterhin ein erhebliches Problem dar, wodurch insbesondere in Grenzbereichen erhebliche Abweichungen von einer beabsichtigten Streugutverteilung auf der landwirtschaftlichen Nutzfläche auftreten können. Um die Streugutausbringung im Übergangsbereich zum Vorgewende zu verbessern, schlägt die Druckschrift DE 10 2014 115 560 A1 eine vorausschauende Mengenregulierung während des Befahrens des Vorgewendes vor, sodass beim Fortsetzen der Streugutausbringung direkt eine geeignete Menge an Streugut zur Aufgabe auf die Streuscheiben zur Verfügung steht.

Aus der Druckschrift EP 2 417 848 A2 ist ferner die Einstellung einer Standardkonfiguration an einer landwirtschaftlichen Streumaschine für den Ausbringvorgang im Feldinneren bekannt, wobei die Standardkonfiguration an Übergangspunkten eingestellt wird. An den Übergangspunkten erfolgt auch die Einschaltung der Dosierorgane, sodass die Einstellung der Standardkonfiguration während der Streugutaufgabe erfolgt.

Mit den bisher bekannten Maßnahmen kann die Streugutausbringung in Grenzbereichen jedoch nur geringfügig verbessert werden, sodass sich insbesondere im Übergang zum Vorgewende erhebliche Abweichungen von einer beabsichtigten Streugutverteilung bisher nicht vermeiden lassen.

Die der Erfindung zugrundeliegende Aufgabe besteht somit darin, die Ausbringung von Streugut im Nahbereich von Ausbringgrenzen einer landwirtschaftlichen Nutzfläche zu verbessern.

Die Aufgabe wird gelöst durch ein Verfahren der eingangs genannten Art, wobei die elektronische Steuerungseinrichtung im Rahmen des erfindungsgemäßen Verfahrens bei unterbrochener Streugutaufgabe selbsttätig ein vorausschauendes Einstellen einer für den Einschaltpunkt vorgegebenen Startkonfiguration an der landwirtschaftlichen Streumaschine veranlasst, bevor die landwirtschaftliche Streumaschine den Einschaltpunkt erreicht.

Die Erfindung macht sich die Erkenntnis zunutze, dass vorbereitende Steuerungsmaßnahmen auch vorgenommen werden, wenn keine Streugutaufgabe auf die Streuscheiben der landwirtschaftlichen Streumaschine erfolgt. Die für den Einschaltpunkt vorgegebene Startkonfiguration kann somit bei unterbrochener Streugutaufgabe voreingestellt werden. Die für den Einschaltpunkt vorgegebene Startkonfiguration führt beim Starten der Streugutaufgabe auf die zumindest eine Streuscheibe der landwirtschaftlichen Streumaschine am Einschaltpunkt unmittelbar zu einer beabsichtigten Streugutverteilung in dem an die Ausbringgrenze angrenzenden Bereich der landwirtschaftlichen Nutzfläche.

Der Einschaltpunkt und die Startkonfiguration sind von dem auszubringenden Streugut abhängig und können vor der Streugutausbringung berechnet werden. Die Berechnung des Einschaltpunkts und/oder der Startkonfiguration kann maschinenintern oder -extern erfolgen. Bei den Ausbringgrenzen kann es sich um flächeninterne Ausbringgrenzen oder um Außengrenzen der landwirtschaftlichen Nutzfläche handeln. Die flächeninternen Ausbringgrenzen können die Grenzen zwischen dem Vorgewende und einem Innenbereich der landwirtschaftlichen Nutzfläche sein. Beim Bewegen der landwirtschaftlichen Streumaschine in Richtung des Einschaltpunkts befindet sich die landwirtschaftliche Streumaschine in diesem Fall also im Vorgewende der landwirtschaftlichen Nutzfläche. Wenn die Ausbringgrenze, auf welche sich die landwirtschaftliche Streumaschine zubewegt, eine Außengrenze der landwirtschaftlichen Nutzfläche ist, befindet sich die landwirtschaftliche Streumaschine beim Bewegen in Richtung des Einschaltpunkts beispielsweise außerhalb der landwirtschaftlichen Nutzfläche. Diese Situation ergibt sich beispielsweise beim erstmaligen Auffahren auf die landwirtschaftliche Nutzfläche zu Beginn des Ausbringvorgangs.

Die elektronische Steuerungseinrichtung kann beispielsweise Bestandteil der landwirtschaftlichen Streumaschine sein. Die elektronische Steuerungseinrichtung kann ein Terminal umfassen, welches während des Ausbringvorgangs in der Fahrerkabine eines Traktors, an welchen die landwirtschaftliche Streumaschine angebaut ist, verwendet werden kann. Das Terminal kann signalleitend mit einem Jobrechner der landwirtschaftlichen Streumaschine verbunden sein. Das Terminal kann also als funktionaler Bestandteil der elektronischen Steuerungseinrichtung der landwirtschaftlichen Streumaschine angesehen werden. Die Informationen zu den Ausbringgrenzen können der elektronischen Steuerungseinrichtung, insbesondere dem Terminal, über ein Datenpaket bereitgestellt werden. Das Datenpaket kann auf unterschiedliche Arten im Vorfeld des Ausbringvorgangs erzeugt werden. Der Jobrechner der Streumaschine kann von dem Terminal Schaltbefehle zur Einstellung der Startkonfiguration empfangen.

Die Streumaschine kann zwei nebeneinander angeordnete Streuscheiben aufweisen. Die Streumaschine kann ein Düngerstreuer, insbesondere ein Zweischeiben-Zentrifugaldüngerstreuer, sein.

In einer weiteren bevorzugten Ausführungsform des erfindungsgemäßen Verfahrens wird beim vorausschauenden Einstellen der Startkonfiguration an der landwirtschaftlichen Streumaschine bei unterbrochener Streugutaufgabe eine für den Einschaltpunkt vorgegebene Startdrehzahl an der zumindest einen Streuscheibe eingestellt. Bei Veranlassung der Streugutaufgabe auf die zumindest eine Streuscheibe am Einschaltpunkt dreht sich die zumindest eine Streuscheibe also bereits mit der vorgegebenen Startdrehzahl, sodass nach Veranlassung der Streugutaufgabe keine weitere Drehzahlanpassung erforderlich ist. Die für den Einschaltpunkt vorgegebene Startdrehzahl an der zumindest einen Streuscheibe führt beim Starten der Streugutaufgabe auf die zumindest eine Streuscheibe, in Kombination mit der übrigen Maschinenkonfiguration, am Einschaltpunkt unmittelbar zu einer beabsichtigten Streugutverteilung in dem an die Ausbringgrenze angrenzenden Bereich der landwirtschaftlichen Nutzfläche.

In einer weiteren bevorzugten Ausführungsform des erfindungsgemäßen Verfahrens wird beim vorausschauenden Einstellen der Startkonfiguration an der landwirtschaftlichen Streumaschine bei unterbrochener Streugutaufgabe eine für den Einschaltpunkt vorgegebene Aufgabepunkteinstellung an einer Aufgabepunkt-Verstelleinrichtung der landwirtschaftlichen Streumaschine vorgenommen. Wenn die landwirtschaftliche Streumaschine den Einschaltpunkt erreicht, ist also die erforderliche Aufgabepunkteinstellung an der Aufgabepunkt-Verstelleinrichtung bereits vorgenommen, sodass keine weitere Verstellung der Aufgabepunkt-Verstelleinrichtung erforderlich ist. Die für den Einschaltpunkt vorgegebene Aufgabepunkteinstellung an der Aufgabepunkt-Verstelleinrichtung der landwirtschaftlichen Streumaschine führt beim Starten der Streugutaufgabe auf die zumindest eine Streuscheibe, in Kombination mit der übrigen Maschinenkonfiguration, am Einschaltpunkt unmittelbar zu einer beabsichtigten Streugutverteilung in dem an die Ausbringgrenze angrenzenden Bereich der landwirtschaftlichen Nutzfläche. Die Aufgabepunkt-Verstelleinrichtung kann einen Verstellmechanismus umfassen, mit welchem die Position und/oder Form einer Auslauföffnung veränderbar ist. Über die Auslauföffnung kann das Streugut einen Vorratsbehälter verlassen und unter Schwerkrafteinwirkung auf eine unterhalb der Auslauföffnung angeordnete Streuscheibe fallen. Der Verstellmechanismus kann einen Schieber aufweisen, mit welchem ein Streugutdurchlass zur Einstellung der Position und/oder Form der Auslauföffnung teilweise oder vollständig verdeckt bzw. verschlossen werden kann.

Es ist außerdem beim erfindungsgemäßen Verfahren definiert, dass die elektronische Steuerungseinrichtung vor dem Bewegen der landwirtschaftlichen Streumaschine in Richtung des Einschaltpunkts bei Erreichen eines vorgegebenen Ausschaltpunkts im Nahbereich der Ausbringgrenze der landwirtschaftlichen Nutzfläche selbsttätig ein Unterbrechen einer Streugutaufgabe auf die zumindest eine Streuscheibe der landwirtschaftlichen Streumaschine veranlasst. Die landwirtschaftliche Streumaschine wird in diesem Fall also in Richtung des vorgegebenen Ausschaltpunkts im Nahbereich einer Ausbringgrenze der landwirtschaftlichen Nutzfläche bewegt, an welchem die Unterbrechung der Streugutaufgabe auf die zumindest eine Streuscheibe beabsichtigt ist. Die landwirtschaftliche Streumaschine bewegt sich also beispielsweise vom Feldinneren auf das Vorgewende zu. Der Ausschaltpunkt ist von dem auszubringenden Streugut abhängig und kann vor der Streugutausbringung berechnet werden. Die Berechnung des Ausschaltpunkts kann maschinenintern oder maschinenextern erfolgen. Das Starten der Streugutaufgabe auf die zumindest Streuscheibe am Einschaltpunkt stellt in diesem Fall beispielsweise eine Fortsetzung der Streugutausbringung in der benachbarten Fahrgasse dar.

Es ist außerdem ein erfindungsgemäßes Verfahren bevorzugt, bei welchem die elektronische Steuerungseinrichtung das vorausschauende Einstellen der Startkonfiguration an der landwirtschaftlichen Streumaschine unmittelbar nach dem Unterbrechen der Streugutaufgabe auf die zumindest eine Streuscheibe der landwirtschaftlichen Streumaschine am Ausschaltpunkt veranlasst. Die vorbereitenden Einstellmaßnahmen für die Wiederaufgabe von Streugut werden also beispielsweise bereits beim Einfahren in das Vorgewende veranlasst. Während des Befahrens des Vorgewendes erfolgt üblicherweise ein Wendevorgang, sodass die benachbarte Fahrgasse mit entgegengesetzter Fahrtrichtung befahren werden kann. Während des Wendevorgangs im Vorgewende ist die Streugutaufgabe unterbrochen. Zum vorausschauenden Einstellen der Startkonfiguration kann also die Zeitspanne genutzt werden, in welcher der Wendevorgang innerhalb des Vorgewendes erfolgt.

In einer anderen bevorzugten Ausführungsform des erfindungsgemäßen Verfahrens weist die landwirtschaftliche Streumaschine eine Teilbreitenschaltung auf, mittels welcher mehrere Teilbreiten zur Anpassung der Streubreite ein- und ausschaltbar sind. Die Teilbreitenschaltung befindet sich in der Startkonfiguration der landwirtschaftlichen Streumaschine in einem Startschaltungszustand mit mehreren ausgeschalteten Teilbreiten. In Grenznähe wird also zunächst eine Streugutverteilung umgesetzt, bei welcher einzelne Teilbreiten eingeschaltet und einzelne Teilbreiten ausgeschaltet sind.

In einer Weiterbildung des erfindungsgemäßen Verfahrens veranlasst die elektronische Steuerungseinrichtung nach dem Passieren des Einschaltpunkts eine schrittweise Einschaltung der ausgeschalteten Teilbreiten der Teilbreitenschaltung. Nach dem Passieren des Einschaltpunkts wird somit schrittweise die Streugutverteilung eingestellt, welche für die Ausbringung im Innenbereich der landwirtschaftlichen Nutzfläche während der Ausführung von Parallelfahrten vorgegebenen ist. Mit zunehmendem Abstand von der Ausbringgrenze entfernt sich die Konfiguration der landwirtschaftlichen Streumaschine also nach und nach von der Startkonfiguration.

In einer anderen bevorzugten Ausführungsform des erfindungsgemäßen Verfahrens sind in dem Startschaltungszustand der Teilbreitenschaltung eine oder mehrere außenliegende Teilbreiten eingeschaltet und mehrere innenliegende Teilbreiten ausgeschaltet. Die schrittweise Einschaltung der innenliegenden ausgeschalteten Teilbreiten erfolgt nach dem Passieren des Einschaltpunkts von außen nach innen. Der Streufächer der landwirtschaftlichen Streumaschine weist vorzugsweise eine Sichelform auf, wobei die außenliegenden Sichelspitzen nach vorne, also in Fahrtrichtung, zeigen. Beim Überfahren einer Ausbringgrenze sind zum Fortsetzen der Streugutausbringung also zunächst die außenliegenden Teilbreiten einzuschalten, welche sich im Bereich der Sichelspitzen befinden. Beim Einfahren vom Vorgewende in das Feldinnere werden die Teilbreiten von außen nach innen eingeschaltet. Beim Ausfahren aus dem Feldinneren in das Vorgewende werden die Teilbreiten von außen nach innen abgeschaltet. In der Startkonfiguration der Streumaschine bzw. in dem Startschaltungszustand der Teilbreitenschaltung weist zumindest eine Streuscheibe also eine vergleichsweise hohe Drehzahl auf und die Aufgabepunkt-Verstelleinrichtung gibt einen vergleichsweise stark nach außen verdrehten Aufgabepunkt vor. Nach dem Passieren des Einschaltpunkts wird der Aufgabepunkt durch die Aufgabepunkt-Verstelleinrichtung dann nach innen verdreht, um die Standardeinstellung für das Feldinnere zu erreichen.

Die der Erfindung zugrundeliegende Aufgabe wird ferner durch eine landwirtschaftliche Streumaschine der eingangs genannten Art gelöst, wobei die elektronische Steuerungseinrichtung dazu eingerichtet ist, bei unterbrochener Streugutaufgabe selbsttätig ein vorausschauendes Einstellen einer für den Einschaltpunkt im Nahbereich einer Ausbringgrenze der landwirtschaftlichen Nutzfläche, an welchem der Start der Streugutaufgabe auf zumindest eine Streuscheibe beabsichtigt ist, vorgegebenen Startkonfiguration an der landwirtschaftlichen Streumaschine zu veranlassen, bevor die landwirtschaftliche Streumaschine den Einschaltpunkt erreicht. Mit der erfindungsgemäßen landwirtschaftlichen Streumaschine lässt sich vorzugsweise das erfindungsgemäße Verfahren zum Ausbringen von Streugut nach einer der vorstehend beschriebenen Ausführungsformen ausführen. Somit wird hinsichtlich der Vorteile und Modifikationen der erfindungsgemäßen Streumaschine zunächst auf die Vorteile und Modifikationen des erfindungsgemäßen Verfahrens verwiesen.

Die Steuerungseinrichtung der landwirtschaftlichen Streumaschine kann ein Terminal umfassen, welches sich während der Streugutausbringung in der Fahrerkabine eines Traktors befinden kann. Die Streumaschine ist vorzugsweise ein Anbaugerät, welches an den Traktor angebaut ist. Bei der Ausbringung von Streugut bildet das Terminal einen funktionalen Bestandteil der landwirtschaftlichen Streumaschine. Das Terminal kann über eine signalleitende Verbindung, beispielsweise über ein Bus-System, mit einem Jobrechner der landwirtschaftlichen Streumaschine verbunden sein. Der Jobrechner der landwirtschaftlichen Streumaschine kann von dem Terminal Schaltbefehle empfangen und über die empfangenen Schaltbefehle die Einstellung der Startkonfiguration an der landwirtschaftlichen Streumaschine veranlassen.

In einer bevorzugten Ausführungsform der erfindungsgemäßen landwirtschaftlichen Streumaschine ist die elektronische Steuerungseinrichtung dazu eingerichtet, beim vorausschauenden Einstellen der Startkonfiguration an der landwirtschaftlichen Streumaschine bei unterbrochener Streugutaufgabe das Einstellen einer für den Einschaltpunkt vorgegebenen Startdrehzahl an der zumindest einen Streuscheibe zu veranlassen. Alternativ oder zusätzlich kann die elektronische Steuerungseinrichtung dazu eingerichtet sein, beim vorausschauenden Einstellen der Startkonfiguration an der landwirtschaftlichen Streumaschine bei unterbrochener Streugutaufgabe das Einstellen einer für den Einschaltpunkt vorgegebenen Aufgabepunkteinstellung an der Aufgabepunkt-Verstelleinrichtung der landwirtschaftlichen Streumaschine zu veranlassen. Die landwirtschaftliche Streumaschine ist also dazu eingerichtet, bei einer Bewegung in Richtung der Ausbringgrenze bei unterbrochener Streugutaufgabe eine vorgegebene Startdrehzahl und/oder eine vorgegebene Aufgabepunkteinstellung an der Aufgabepunkt-Verstelleinrichtung einzustellen. Bei Erreichen des Einschaltpunkts wird somit direkt das beabsichtigte Streubild umgesetzt, ohne dass eine weitere Anpassung der Streuscheibendrehzahl und/oder der Aufgabepunkt-Verstelleinrichtung erforderlich ist.

Die erfindungsgemäße landwirtschaftliche Streumaschine wird ferner dadurch ausgebildet, dass die elektronische Steuerungseinrichtung dazu eingerichtet ist, dass vorausschauende Einstellen der Startkonfiguration an der landwirtschaftlichen Streumaschine unmittelbar nach dem Unterbrechen der Streugutaufgabe auf die zumindest eine Streuscheibe der landwirtschaftlichen Streumaschine an einem Ausschaltpunkt zu veranlassen. Die vorbereitenden Einstellmaßnahmen für die Wiederaufgabe von Streugut auf die Streuscheibe werden also beispielsweise bereits beim Einfahren in das Vorgewende veranlasst.

In einer weiteren bevorzugten Ausführungsform weist die erfindungsgemäße landwirtschaftliche Streumaschine eine Teilbreitenschaltung auf, mittels welcher Teilbreiten zur Anpassung der Streubreite ein- und ausschaltbar sind. Die elektronische Steuerungseinrichtung kann dazu eingerichtet sein, nach dem Passieren des Einschaltpunkts eine schrittweise Einschaltung von ausgeschalteten Teilbreiten der Teilbreitenschaltung zu veranlassen. Nachfolgend wird eine bevorzugte Ausführungsform der Erfindung unter Bezugnahme auf die beiliegende Zeichnung näher erläutert und beschrieben. Dabei zeigt:

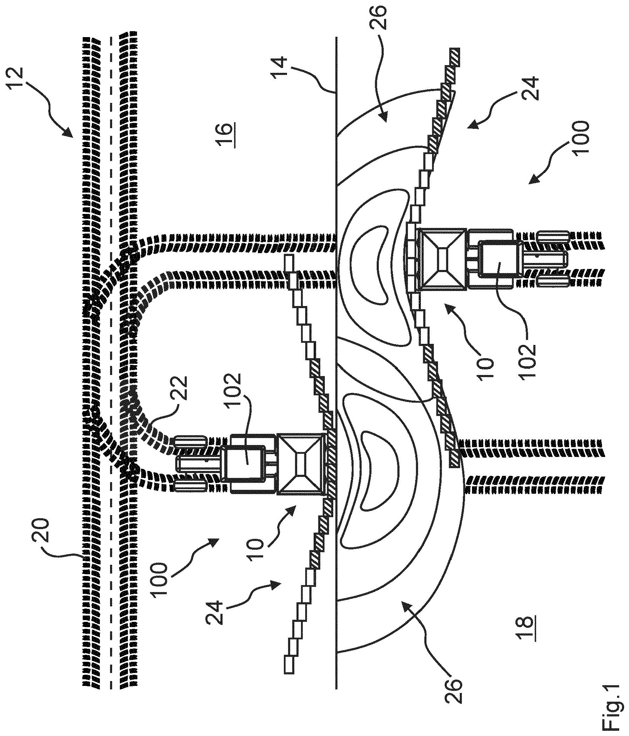

- Fig. 1: eine landwirtschaftliche Streumaschine während des Ausführens des erfindungsgemäßen Verfahrens.

Die Fig. 1 zeigt einen Streugut-Ausbringvorgang. Das Streugut wird mittels eines Gespanns 100 aus einem Fahrzeug 102 und einer landwirtschaftlichen Streumaschine 10 ausgebracht. Bei dem Fahrzeug 102 handelt es sich um einen Traktor, wobei die landwirtschaftliche Streumaschine 10 ein Düngerstreuer ist. Die Streumaschine 10 ist als Anbaugerät ausgeführt und über einen DreipunktKraftheber mit dem Fahrzeug 102 verbunden.

Der dargestellte Ausschnitt der landwirtschaftlichen Nutzfläche 12 zeigt eine Ausbringgrenze 14, welche das Vorgewende 16 von dem Innenbereich 18 der landwirtschaftlichen Nutzfläche 12 abgrenzt. Innerhalb des Vorgewendes 16 verläuft die Fahrgasse 20, auf welche sich das Gespann 100 beim Befahren der Fahrgasse 22 zunächst zubewegt und später wieder entfernt. Innerhalb des Vorgewendes 16 führt das Gespann 100 einen Wendevorgang aus.

Die landwirtschaftliche Streumaschine 10 umfasst zwei nebeneinander angeordnete Streuscheiben, wobei jeder Streuscheibe eine Aufgabepunkt-Verstelleinrichtung zugeordnet ist. Mittels der Aufgabepunkt-Verstelleinrichtung kann der Aufgabepunkt des auf die jeweilige Streuscheibe aufgebrachten Streuguts eingestellt werden. Außerdem weist die landwirtschaftliche Streumaschine 10 eine Teilbreitenschaltung auf, mittels welcher Teilbreiten 24 zur Anpassung der Streubreite ein- und ausschaltbar sind. Der Streufächer 26 der landwirtschaftlichen Streumaschine 10 weist eine Sichelform auf, wobei die außenliegenden Sicherspitzen nach vorne, also in Fahrtrichtung zeigen. Beim Ausfahren aus dem Innenbereich 18 in das Vorgewende 16 werden die Teilbreiten 24 von außen nach innen abgeschaltet. Beim Einfahren in den Innenbereich 18 werden die Teilbreiten 24 von außen nach innen eingeschaltet.

Die landwirtschaftliche Streumaschine 10 umfasst ferner eine elektronische Steuerungseinrichtung. Die elektronische Steuerungseinrichtung kann beispielsweise einen Jobrechner und einen signalleitend mit dem Jobrechner verbundenes Terminal umfassen. Das Terminal kann während des Ausbringvorgangs in der Fahrerkabine des Fahrzeugs 102 mitgeführt werden, da das Terminal dem Fahrzeugführer über ein Display ergänzende Informationen zum Ausbringvorgang anzeigen kann. Mittels der elektronischen Steuerungseinrichtung lässt sich der Betrieb der Streuscheiben und der Betrieb der Aufgabepunkt-Verstelleinrichtung steuern.

Der elektronischen Steuerungseinrichtung wurden im Vorfeld der dargestellten Ausbringsituation Informationen zu den Ausbringgrenzen 14 der landwirtschaftlichen Nutzfläche 12 bereitgestellt. Die Bereitstellung der Informationen zu den Ausbringgrenzen 14 kann beispielsweise über ein Datenpaket erfolgt sein, welches von dem Terminal abgerufen wird. Das Datenpaket umfasst Informationen zu dem Verlauf von feldinternen Ausbringgrenzen, wie beispielsweise der dargestellten Ausbringgrenze 14 zwischen dem Vorgewende 16 und dem Innenbereich 18, und Außengrenzen der landwirtschaftlichen Nutzfläche 12.

Beim Befahren der Fahrgasse 22 bewegt sich die landwirtschaftliche Streumaschine 10 in Richtung eines vorgegebenen Ausschaltpunkts im Nahbereich der Ausbringgrenze 14. Bei Erreichen des vorgegebenen Ausschaltpunkts im Nahbereich der Ausbringgrenze 14 veranlasst die elektronische Steuerungseinrichtung selbsttätig ein Unterbrechen der Streugutaufgabe auf die Streuscheiben der landwirtschaftlichen Streumaschine 10. Unmittelbar nach dem Unterbrechen der Streugutaufgabe veranlasst die elektronische Steuerungseinrichtung ein vorausschauendes Einstellen einer Startkonfiguration an der landwirtschaftlichen Streumaschine 10. Die Startkonfiguration ist vorgegeben und bezieht sich auf einen Einschaltpunkt im Nahbereich der Ausbringgrenze 14, an welchem die Streugutaufgabe auf die Streuscheiben nach Durchführen des Wendevorgangs wieder fortgesetzt werden soll. Die elektronische Steuerungseinrichtung veranlasst also bei unterbrochener Streugutaufgabe selbsttätig das vorausschauende Einstellen der für den Einschaltpunkt vorgegebenen Startkonfiguration an der landwirtschaftlichen Streumaschine, bevor die landwirtschaftliche Streumaschine 10 den Einschaltpunkt erreicht. Somit werden die vorbereitenden Einstellmaßnahmen für die Wiederaufgabe von Streugut auf die Streuscheiben bereits beim Einfahren in das Vorgewende 16 veranlasst. Die für den Einschaltpunkt vorgegebene Startkonfiguration führt beim Starten der Streugutaufgabe auf die Streuscheiben am Einschaltpunkt unmittelbar zu der beabsichtigten Streugutverteilung in dem an die Ausbringgrenze 14 angrenzenden Bereich der landwirtschaftlichen Nutzfläche 12.

Beim vorausschauenden Einstellen der Startkonfiguration während des Befahrens des Vorgewendes 16 wird bei unterbrochener Streugutaufgabe eine für den Einschaltpunkt vorgegebene Startdrehzahl an den Streuscheiben eingestellt. Ferner wird beim vorausschauenden Einstellen der Startkonfiguration während des Befahrens des Vorgewendes 16 eine für den Einschaltpunkt vorgegebene Aufgabepunkteinstellung an den Aufgabepunkt-Verstelleinrichtungen der landwirtschaftlichen Streumaschine 10 vorgenommen.

Nach dem Passieren des Einschaltpunkts veranlasst die elektronische Steuerungseinrichtung eine schrittweise Einschaltung der ausgeschalteten Teilbreiten 24 der Teilbreitenschaltung. In Grenznähe erfolgt die Streugutausbringung also zunächst im Bereich der außenliegenden Teilbreiten 24. Nach dem Passieren des Einschaltpunkts wird dann schrittweise die Streugutverteilung eingestellt, welche für die Ausbringung im Innenbereich 18 der landwirtschaftlichen Nutzfläche 12 während der Durchführung von Parallelfahrten vorgegeben ist. Hierzu werden die innenliegenden Teilbreiten nach und nach aktiviert.

Die Teilbreitenschaltung befindet sich in der Startkonfiguration der landwirtschaftlichen Streumaschine 10 also zunächst in einem Startschaltungszustand mit mehreren ausgeschalteten Teilbreiten 24. In dem Startschaltungszustand der Teilbreitenschaltung sind mehrere außenliegende Teilbreiten 24 eingeschaltet und mehrere innenliegende Teilbreiten 24 ausgeschaltet. Nach dem Passieren des Einschaltpunkts erfolgt eine schrittweise Einschaltung der innenliegenden Teilbreiten 24 von außen nach innen.

### Bezugszeichenliste

- 10: Streumaschine
- 12: Nutzfläche
- 14: Ausbringgrenze
- 16: Vorgewende
- 18: Innenbereich
- 20: Fahrgasse
- 22: Fahrgasse
- 24: Teilbreiten
- 26: Streufächer

- 100: Gespann
- 102: Fahrzeug

## Patentansprüche

1. Verfahren zum Ausbringen von Streugut auf eine landwirtschaftliche Nutzfläche (12) mittels einer landwirtschaftlichen Streumaschine (10), mit den Schritten:
- Bereitstellen von Informationen zu Ausbringgrenzen (14) einer landwirtschaftlichen Nutzfläche (12) für eine elektronische Steuerungseinrichtung, und
- Bewegen der landwirtschaftlichen Streumaschine (10) in Richtung eines vorgegebenen Einschaltpunkts im Nahbereich einer Ausbringgrenze (14) der landwirtschaftlichen Nutzfläche (12), an welchem der Start der Streugutaufgabe auf zumindest eine Streuscheibe beabsichtigt ist,
wobei die elektronische Steuerungseinrichtung vor dem Bewegen der landwirtschaftlichen Streumaschine (10) in Richtung des Einschaltpunkts bei Erreichen eines vorgegebenen Ausschaltpunkts im Nahbereich der Ausbringgrenze (14) der landwirtschaftlichen Nutzfläche (12) selbsttätig ein Unterbrechen einer Streugutaufgabe auf die zumindest eine Streuscheibe der landwirtschaftlichen Streumaschine (10) veranlasst,
wobei die elektronische Steuerungseinrichtung bei unterbrochener Streugutaufgabe selbsttätig ein vorausschauendes Einstellen einer für den Einschaltpunkt vorgegebenen Startkonfiguration an der landwirtschaftlichen Streumaschine (10) veranlasst, bevor die landwirtschaftliche Streumaschine (10) den Einschaltpunkt erreicht, und
wobei beim vorausschauenden Einstellen der Startkonfiguration an der landwirtschaftlichen Streumaschine (10) bei unterbrochener Streugutaufgabe eine für den Einschaltpunkt vorgegebene Startdrehzahl an der zumindest einen Streuscheibe eingestellt wird, und/oder
wobei beim vorausschauenden Einstellen der Startkonfiguration an der landwirtschaftlichen Streumaschine (10) bei unterbrochener Streugutaufgabe eine für den Einschaltpunkt vorgegebene Aufgabepunkteinstellung an einer Aufgabepunkt-Verstelleinrichtung der landwirtschaftlichen Streumaschine (10) vorgenommen wird.

2. Verfahren nach Anspruch 1,
**dadurch gekennzeichnet, dass** die elektronische Steuerungseinrichtung das vorausschauende Einstellen der Startkonfiguration an der landwirtschaftlichen Streumaschine (10) unmittelbar nach dem Unterbrechen der Streugutaufgabe auf die zumindest eine Streuscheibe der landwirtschaftlichen Streumaschine (10) am Ausschaltpunkt veranlasst.

3. Verfahren nach Anspruch 1 oder Anspruch 2,
**dadurch gekennzeichnet, dass** die landwirtschaftliche Streumaschine (10) eine Teilbreitenschaltung aufweist, mittels welcher mehrere Teilbreiten (24) zur Anpassung der Streubreite ein- und ausschaltbar sind, wobei sich die Teilbreitenschaltung in der Startkonfiguration der landwirtschaftlichen Streumaschine (10) in einem Startschaltungszustand mit mehreren ausgeschalteten Teilbreiten (24) befindet.

4. Verfahren nach Anspruch 3,
**dadurch gekennzeichnet, dass** die elektronische Steuerungseinrichtung nach dem Passieren des Einschaltpunkts eine schrittweise Einschaltung der ausgeschalteten Teilbreiten (24) der Teilbreitenschaltung veranlasst.

5. Verfahren nach Anspruch 3 oder 4,
**dadurch gekennzeichnet, dass** in dem Startschaltungszustand der Teilbreitenschaltung eine oder mehrere außenliegende Teilbreiten (24) eingeschaltet und mehrere innenliegende Teilbreiten (24) ausgeschaltet sind, wobei die schrittweise Einschaltung der innenliegenden ausgeschalteten Teilbreiten (24) nach dem Passieren des Einschaltpunkts von außen nach innen erfolgt.

6. Landwirtschaftliche Streumaschine (10), mit
- zumindest einer Streuscheibe;
- zumindest einer Aufgabepunkt-Verstelleinrichtung, mittels welcher der Aufgabepunkt des auf die Streuscheibe aufgegebenen Streuguts einstellbar ist; und
- einer elektronischen Steuerungseinrichtung, welche dazu eingerichtet ist, Informationen zu Ausbringgrenzen (14) einer landwirtschaftlichen Nutzfläche (12) zu verarbeiten und mittels welcher der Betrieb der zumindest einen Streuscheibe und der Betrieb der zumindest einen Aufgabepunkt-Verstelleinrichtung steuerbar ist;
wobei die elektronische Steuerungseinrichtung dazu eingerichtet ist, bei unterbrochener Streugutaufgabe selbsttätig ein vorausschauendes Einstellen einer für einen Einschaltpunkt im Nahbereich einer Ausbringgrenze (14) der landwirtschaftlichen Nutzfläche (12), an welchem der Start der Streugutaufgabe auf zumindest eine Streuscheibe beabsichtigt ist, vorgegebenen Startkonfiguration an der landwirtschaftlichen Streumaschine (10) zu veranlassen, bevor die landwirtschaftliche Streumaschine (10) den Einschaltpunkt erreicht, wobei die elektronische Steuerungseinrichtung dazu eingerichtet ist, das vorausschauende Einstellen der Startkonfiguration an der landwirtschaftlichen Streumaschine (10) unmittelbar nach dem Unterbrechen der Streugutaufgabe auf die zumindest eine Streuscheibe der landwirtschaftlichen Streumaschine (10) an einem Ausschaltpunkt zu veranlassen.

7. Landwirtschaftliche Streumaschine (10) nach Anspruch 6,
**dadurch gekennzeichnet, dass** die elektronische Steuerungseinrichtung dazu eingerichtet ist,
- beim vorausschauenden Einstellen der Startkonfiguration an der landwirtschaftlichen Streumaschine (10) bei unterbrochener Streugutaufgabe das Einstellen einer für den Einschaltpunkt vorgegebene Startdrehzahl an der zumindest einen Streuscheibe zu veranlassen; und/oder
- beim vorausschauenden Einstellen der Startkonfiguration an der landwirtschaftlichen Streumaschine (10) bei unterbrochener Streugutaufgabe das Einstellen einer für den Einschaltpunkt vorgegebenen Aufgabepunkteinstellung an der Aufgabepunkt-Verstelleinrichtung der landwirtschaftlichen Streumaschine (10) zu veranlassen.

8. Landwirtschaftliche Streumaschine (10) nach Anspruch 6 oder 7, ferner umfassend:
- eine Teilbreitenschaltung, mittels welcher Teilbreiten (24) zur Anpassung der Streubreite ein- und ausschaltbar sind,
wobei die elektronische Steuerungseinrichtung dazu eingerichtet ist, nach dem Passieren des Einschaltpunkts eine schrittweise Einschaltung von ausgeschalteten Teilbreiten (24) der Teilbreitenschaltung zu veranlassen.

## Claims

1. Method for applying spreading material on an agricultural area (12) by means of an agricultural spreader (10), having the steps of:
- providing information on application boundaries (14) of an agricultural area (12) for an electronic control device, and
- moving the agricultural spreader (10) in the direction of a predetermined switch-on point in the vicinity of an application boundary (14) of the agricultural area (12), at which point the application of spreading material onto at least one spreading disc is intended to begin,
wherein the electronic control device, before the agricultural spreader (10) is moved in the direction of the switch-on point, automatically interrupts the application of spreading material onto the at least one spreading disc of the agricultural spreader (10) when a predetermined switch-off point is reached in the vicinity of the application boundary (14) of the agricultural area (12),
wherein, when the application of spreading material is interrupted, the electronic control device automatically initiates a predictive setting of a start configuration predetermined for the switch-on point on the agricultural spreader (10) before the agricultural spreader (10) reaches the switch-on point, and
wherein, during the predictive setting of the start configuration on the agricultural spreader (10) when the application of spreading material is interrupted, a start speed predetermined for the switch-on point is set on the at least one spreading disc, and/or
wherein, during the predictive setting of the start configuration on the agricultural spreader (10) when the application of spreading material is interrupted, a application point setting predetermined for the switch-on point is carried out on a application point adjustment device of the agricultural spreader (10).

2. Method according to claim 1,
**characterized in that** the electronic control device causes the predictive setting of the start configuration on the agricultural spreader (10) immediately after the interruption of the application of spreading material onto the at least one spreading disc of the agricultural spreader (10) at the switch-off point.

3. Method according to either claim 1 or claim 2,
**characterized in that** the agricultural spreader (10) has a partial-width section control switch by means of which a plurality of partial-width sections (24) can be switched on and off to adjust the spreading width, wherein the partial-width section control, in the start configuration of the agricultural spreader (10), is in a start switching state with a plurality of partial-width sections (24) switched off.

4. Method according to claim 3,
**characterized in that** the electronic control device causes the switched off partial-width sections (24) of the partial-width section control to be switched on step by step after the switch-on point has been passed.

5. Method according to either claim 3 or claim 4,
**characterized in that** in the start switching state of the partial-width section control, one or more outer partial-width sections (24) are switched on and a plurality of inner partial-width sections (24) are switched off, wherein the step-by-step switching on of the inner switched off partial-width sections (24) takes place from the outside to the inside after the switching-on point has been passed.

6. Agricultural spreader (10), comprising
- at least one spreading disc;
- at least one application point adjustment device, by means of which the application point of the spreading material applied to the spreading disc can be adjusted; and
- an electronic control device which is designed to process information on application boundaries (14) of an agricultural area (12) and by means of which the operation of the at least one spreading disc and the operation of the at least one application point adjustment device can be controlled;
wherein the electronic control device is designed, when the application of spreading material is interrupted, to automatically initiate a predictive setting of a start configuration on the agricultural spreader (10) for a switch-on point in the vicinity of a spreading boundary (14) of the agricultural area (12), at which point the application of the spreading material onto at least one spreading disc is intended to begin, before the agricultural spreader (10) reaches the switch-on point, wherein the electronic control device is designed to initiate the predictive setting of the start configuration on the agricultural spreader (10) at a switch-off point immediately after the interruption of the application of the spreading material onto the at least one spreading disc of the agricultural spreader (10).

7. Agricultural spreader (10) according to claim 6,
**characterized in that** the electronic control device is designed,
- when predictively setting the start configuration on the agricultural spreader (10), to cause the setting of a start speed predetermined for the switch-on point on the at least one spreading disc when the application of spreading material is interrupted; and/or
- when predictively setting the start configuration on the agricultural spreader (10), to cause the setting of an application point setting predetermined for the switch-on point on the application point adjustment device of the agricultural spreader (10) when the application of spreading material is interrupted.

8. Agricultural spreader (10) according to either claim 6 or claim 7, further comprising:
- a partial-width section control, by means of which partial-width sections (24) can be switched on and off to adjust the spreading width,
wherein the electronic control device is designed to cause a step-by-step switching on of switched off partial-width sections (24) of the partial-width section control after the switch-on point has been passed.

## Revendications

1. Procédé d'épandage de produit d'épandage sur une surface utile (12) agricole au moyen d'une machine d'épandage (10) agricole, comportant les étapes de :
- mise à disposition d'informations sur des limites d'épandage (14) d'une surface utile (12) agricole à un dispositif de commande électronique et
- déplacement de la machine d'épandage (10) agricole en direction d'un point d'activation prédéterminé dans la zone proche d'une limite d'épandage (14) de la surface utile (12) agricole, au niveau duquel le démarrage de l'application de produit d'épandage sur au moins un disque d'épandage est envisagé,
le dispositif de commande électronique provoquant automatiquement, avant le déplacement de la machine d'épandage (10) agricole en direction du point d'activation, lorsqu'un point de désactivation prédéterminé est atteint dans la zone proche de la limite d'épandage (14) de la surface utile (12) agricole, une interruption d'une application de produit d'épandage sur l'au moins un disque d'épandage de la machine d'épandage (10) agricole,
le dispositif de commande électronique provoquant automatiquement, lorsque l'application de produit d'épandage est interrompue, un réglage anticipatif d'une configuration de démarrage prédéterminée pour le point d'activation sur la machine d'épandage (10) agricole avant que la machine d'épandage (10) agricole n'atteigne le point d'activation et
une vitesse de rotation de démarrage prédéterminée pour le point d'activation étant réglée sur l'au moins un disque d'épandage lors du réglage anticipatif de la configuration de démarrage sur la machine d'épandage (10) agricole lorsque l'application de produit d'épandage est interrompue et/ou
un réglage du point d'application prédéterminé pour le point d'activation étant effectué sur un dispositif de réglage de point d'application de la machine d'épandage (10) agricole lors du réglage anticipatif de la configuration de démarrage sur la machine d'épandage (10) agricole lorsque l'application de produit d'épandage est interrompue.

2. Procédé selon la revendication 1,
**caractérisé en ce que** le dispositif de commande électronique provoque le réglage anticipatif de la configuration de démarrage sur la machine d'épandage (10) agricole immédiatement après l'interruption de l'application de produit d'épandage sur l'au moins un disque d'épandage de la machine d'épandage (10) agricole au niveau du point de désactivation.

3. Procédé selon la revendication 1 ou la revendication 2,
**caractérisé en ce que** la machine d'épandage (10) agricole présente une commutation de tronçons au moyen de laquelle plusieurs tronçons (24) peuvent être activés et désactivés afin d'adapter la largeur d'épandage, la commutation de tronçons se trouvant dans la configuration de démarrage de la machine d'épandage (10) agricole dans un état de commutation de démarrage comportant plusieurs tronçons (24) désactivés.

4. Procédé selon la revendication 3,
**caractérisé en ce que** le dispositif de commande électronique provoque, après le passage du point d'activation, une activation progressive des tronçons (24) désactivés de la commutation de tronçons.

5. Procédé selon la revendication 3 ou 4,
**caractérisé en ce que,** dans l'état de commutation de démarrage de la commutation de tronçons, un ou plusieurs tronçons (24) situés à l'extérieur sont activés et plusieurs tronçons (24) situés à l'intérieur sont désactivés, l'activation progressive des tronçons (24) situés à l'intérieur et désactivés s'effectuant de l'extérieur vers l'intérieur après le passage du point d'activation.

6. Machine d'épandage (10) agricole, comportant
- au moins un disque d'épandage ;
- au moins un dispositif de réglage de point d'application, au moyen duquel le point d'application du produit d'épandage appliqué sur le disque d'épandage peut être réglé ; et
- un dispositif de commande électronique qui est conçu pour traiter des informations sur les limites d'épandage (14) d'une surface utile (12) agricole et au moyen duquel le fonctionnement de l'au moins un disque d'épandage et le fonctionnement de l'au moins un dispositif de réglage de point d'application peuvent être commandés ;
le dispositif de commande électronique étant conçu pour provoquer automatiquement, lorsque l'application de produit d'épandage est interrompue, un réglage anticipatif sur la machine d'épandage (10) agricole d'une configuration de démarrage prédéterminée pour un point d'activation dans la zone proche d'une limite d'épandage (14) de la surface utile (12) agricole, au niveau duquel le démarrage de l'application de produit d'épandage sur au moins un disque d'épandage est envisagé, avant que la machine d'épandage (10) agricole n'atteigne le point d'activation, le dispositif de commande électronique étant conçu pour provoquer le réglage anticipatif de la configuration de démarrage sur la machine d'épandage (10) agricole immédiatement après l'interruption de l'application de produit d'épandage sur l'au moins un disque d'épandage de la machine d'épandage (10) agricole au niveau d'un point de désactivation.

7. Machine d'épandage (10) agricole selon la revendication 6,
**caractérisée en ce que** le dispositif de commande électronique est conçu pour,
- lors du réglage anticipatif de la configuration de démarrage sur la machine d'épandage (10) agricole, lorsque l'application de produit d'épandage est interrompue, provoquer le réglage d'une vitesse de rotation de démarrage prédéterminée pour le point d'activation sur l'au moins un disque d'épandage ; et/ou
- lors du réglage anticipatif de la configuration de démarrage sur la machine d'épandage (10) agricole, lorsque l'application de produit d'épandage est interrompue, provoquer le réglage d'un réglage de point d'application prédéterminé pour le point d'activation sur le dispositif de réglage de point d'application de la machine d'épandage (10) agricole.

8. Machine d'épandage (10) agricole selon la revendication 6 ou 7, comprenant en outre :
- une commutation de tronçons, au moyen de laquelle des tronçons (24) peuvent être activés et désactivés afin d'adapter la largeur d'épandage,
le dispositif de commande électronique étant conçu pour provoquer, après le passage du point d'activation, une activation progressive de tronçons (24) désactivés de la commutation de tronçons.
